Europäisches Patentamt

European Patent Office

Office européen des brevets

(11) Veröffentlichungsnummer: **0 164 305**
**B1**

# (12) EUROPÄISCHE PATENTSCHRIFT

(45) Veröffentlichungstag der Patentschrift:
**19.11.87**

(21) Anmeldenummer: **85810160.3**

(22) Anmeldetag: **12.04.85**

(51) Int. Cl.⁴: **B 65 B 23/14**, B 65 G 47/08

(54) Anordnung zum Abtrennen von Gruppen verschiedener Länge aus Gegenständen.

(30) Priorität: **09.05.84 CH 2270/84**

(43) Veröffentlichungstag der Anmeldung:
**11.12.85 Patentblatt 85/50**

(45) Bekanntmachung des Hinweises auf die Patenterteilung:
**19.11.87 Patentblatt 87/47**

(84) Benannte Vertragsstaaten:
**DE FR GB IT NL**

(56) Entgegenhaltungen:
**CH - A - 380 635**
**CH - A - 444 015**

(73) Patentinhaber: **SIG Schweizerische Industrie-Gesellschaft, CH-8212 Neuhausen am Rheinfall (CH)**

(72) Erfinder: **Fluck, René, Schlechtenbolweg 645, CH-8226 Schleitheim (CH)**

(74) Vertreter: **White, William et al, PATENTANWALTS-BUREAU ISLER AG Postfach 6940 Walchestrasse 23, CH-8023 Zürich (CH)**

## Beschreibung

Die vorliegende Erfindung betrifft eine Anordnung zum Abtrennen von Gruppen verschiedener Länge gemäss dem Oberbegriff des unabhängigen Patentanspruches 1.

Beim Verpacken von Biskuits werden die scheibenförmigen Biskuits hochkant stehend zu einer Messstation gefördert, wo sie gruppiert werden. Die Gruppierung erfolgt entweder durch einen Zählvorgang, eine Längenmessung oder durch Wägen. Während einzelne Biskuits nur geringe Gewichtsunterschiede haben, kann deren Dicke erheblich variieren. Wenn deshalb nur eine Längenbestimmung der Gruppe erfolgt, so kann die Anzahl erheblich variieren. Trotzdem wird die Bildung von Gruppen durch eine Längenmessung gewünscht, weil dies die Verpackungsoperationen vereinfacht. Eine solche Abmessvorrichtung ist beispielsweise im US-Patent 3 037 610 beschrieben.

Demgemäss ist es eine Aufgabe der Erfindung, bei einer Anordnung zum Abtrennen von Gruppen von scheibenförmigen, gestapelten Gegenständen eine Verstellung der Gruppenlänge mit einfachen Bedienungsmitteln zu schaffen.

Erfindungsgemäss wird dies durch die Merkmale im kennzeichnenden Teil des unabhängigen Patentanspruches 1 erreicht. In den abhängigen Patentansprüchen sind besonders vorteilhafte Ausführungsformen beschrieben.

Eine Ausführungsbeispiel der Erfindung ist in der Zeichnung dargestellt. Es zeigen

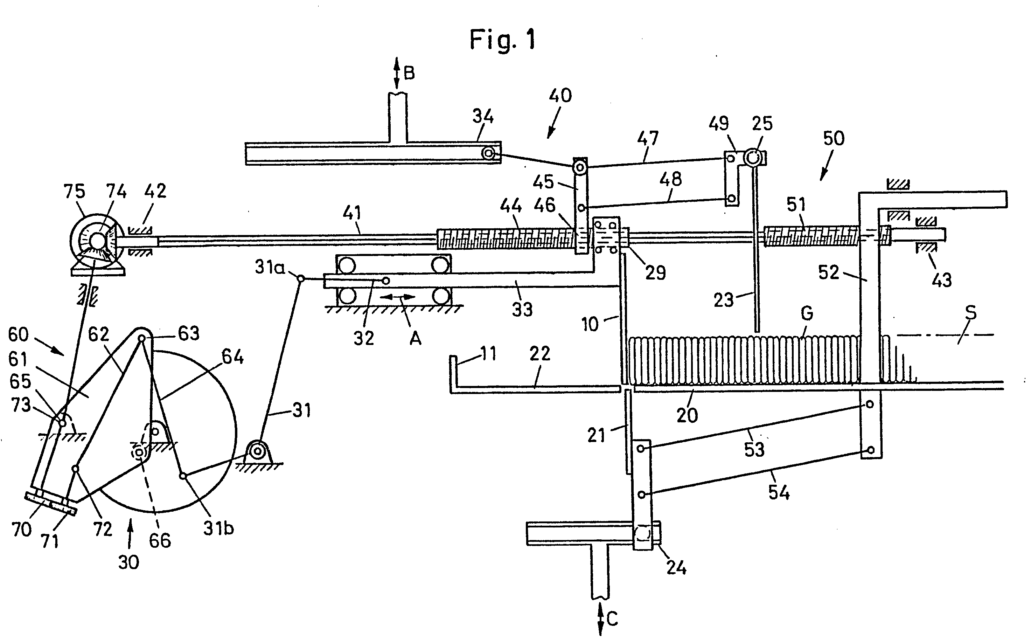

Fig. 1 ein schematisch dargestelltes Getriebeschema, und

Fig. 2 einen Ausschnitt aus Fig. 1 in vergrössertem Massstab zur Darstellung der Antriebskopplung.

Die unregelmässig vom Backofen kommenden, scheibenförmigen, flachen Backwaren werden wie allgemein in der Verpackungsindustrie bekannt ist, zu einem Strom hochkant gestellter Backwaren geschichtet und weitertransportiert, wie im vorgenannten US-Patent Nr. 3 037 610 auch beschrieben ist.

Der damit erhaltene Strom S staut sich an einem Abholboden 10 in seiner stromaufwärtigen Endlage. An derselben Stelle, die durch das stromabwärtige Ende der Führungsauflage 20 gekennzeichnet ist, befindet sich ein Rückhalter 21 und in der geradlinigen Fortsetzung der Führungsauflage liegt ein Aufnahmeboden 22 für den Weitertransport der gruppierten Backwaren, der andeutungsweise ohne die notwendigen Bewegungselemente für den Weitertransport gezeichnet ist. Eine solche Anordnung für den Weitertransport ist z.B. ein Aufnahmetisch, wie er in der CH-A 380 635 dargestellt ist. Ein Trennschwert 23 befindet sich in der dargestellten Phase über dem Strom S von Gegenständen G.

Zur Veränderung der Länge des abgetrennten Stapels muss das Trennschwert 23 mit dem ersten Verstellgetriebe 40 nach links gegen den Abholboden 10 verschoben werden. Die zur eingestellten Gruppenlänge gewünschte Positionierung des ersten Gegenstandes des abgetrennten Stapels bezüglich der Haltewand 11 des Aufnahmebodens 22, wird durch ein zweites Verstellgetriebe 50 und drittes Verstellgetriebe 60 gewährleistet, d.h. das stromabwärtige Ende der Führungsauflage 20 wird zusammen mit dem Abholboden 10, dem Rückhalter 21 und dem Trennschwert 23 nach links verschoben. Der zwischen dem Trennschwert 23 und dem Abholboden 10 befindliche Stapel entspricht dann genau der Gruppenlänge.

In für diese bekannten Elemente üblicher Weise ist eine Steuerung von einer angetriebenen Kurvenscheibenanordnung 30 aus vorhanden, wobei mittels einer ersten Abtastrolle auf einer ersten Kurvenscheibe über einen ersten, gestellfest gelagerten Winkelhebel 31 und eine Pleuelstange 32 ein Verschiebeschlitten 33 gemäss dem Doppelpfeil A hin- und herbewegt wird. An diesem Verschiebeschlitten 33 ist der Abholboden 10 starr befestigt.

Auf einer zweiten Kurvenscheibe mit einer Abtastrolle an einem weiteren nicht dargestellten Gestänge ist eine Horizontalführung 34 für das Trennschwert 23 vertikalbeweglich gemäss dem Doppelpfeil B angetrieben.

Eine dritte Kurvenscheibe mit einer Abtastrolle an einem ebenfalls nicht dargestellten Gestänge bewirkt die vertikale Bewegung gemäss Doppelpfeil C für den Rückhalter 21, der in einer Horizontalführung 24 geführt ist.

Die drei genannten Kurvenscheiben können auf einer gemeinsamen Antriebswelle befestigt sein und gemeinsam rotiert werden, wie aus der Antriebstechnik bekannt ist.

Für die Verstellung der Gruppenlänge sind ein erstes Verstellgetriebe 40, ein zweites Verstellgetriebe 50 und ein drittes Verstellgetriebe 60 vorhanden.

Für das erste Verstellgetriebe 40 und das zweite Verstellgetriebe 50 ist eine Vierkantwelle 41 in zwei gestellfesten Lagerstellen 42, 43 gestellfest gelagert. Als erstes Verstellgetriebe 40 ist eine Gewindehülse 44 auf dieser Vierkantwelle 41 verschieblich geführt. Mit deren Aussengewinde ist die Gewindehülse 44 in einem Führungsstab 45 mit Gewindeloch 46 eingeschraubt. Der Verschiebeschlitten 33 ist mittels eines Drehlagers 29 rotierbar auf der Gewindehülse 44 gelagert, so dass die Gewindehülse 44 eine durch die Bewegung des Verschiebeschlittens 33 bedingt, ebenfalls eine Bewegung gemäss dem Pfeil A ausführen kann.

Durch Drehen des Vierkantstabes 41 wird somit die Lage des Führungstabes 45 bezüglich des Drehlagers 29 verändert und dadurch der Abstand zwischen dem Abholboden 10 und dem Trennschwert 23.

Der Führungsstab 45 dient zur Lagerung von zwei parallelen Stäben 47, 48 eines Parallelogrammgetriebes, dessen beide übrigen Gelenke sich am Haltestab 49 des Trennschwertes 23 befinden. Zusammen mit der vertikalbeweglich angetriebenen Horizontalführung 34 wird damit das Trennschwert bei Bewegung der Horizontalführung 34 gemäss Pfeil B in den Strom S der Gegenstände hineingestossen und wieder herausgezogen. Wie üblich, ist das Trennschwert 23 mit einer Spiralfeder 25 am Haltestab 49 befestigt, um bei einem Widerstand beim Auftreffen auf einen Gegenstand ausweichen zu können.

In gleicher Weise werden Führungsauflage 20 und Rückhalter 21 mittels einer weiteren Gewindehülse 51 im Verstellgetriebe 50 verschoben. Ein horizontalverschieblich geführter Halter 52, mit dem die Führungsauflage 20 starr verbunden ist, dient für die Lagerung zweiter paralleler Stäbe 53, 54 für ein weiteres Parallelogrammgetriebe zur Vertikalbewegung des Rückhalters 21 bei einer Bewegung der Horizontalführung 24 gemäss Pfeil C.

Durch eine Drehbewegung des Vierkantstabes 41 kann nun erreicht werden, dass sich Trennschwert 23, Führungsauflage 20 und Rückhalter 21 um gleiche Beträge nach links in der Figur bewegen, um so die Abstände zu verkleinern.

Damit sich nun aber auch der Abholboden 10 um einen entsprechenden Betrag verschiebt und um gleichzeitig auch den Hub des Abholbodens 10 zu verändern, ist im entsprechenden Antriebselement ein drittes Verstellgetriebe 60 vorgesehen.

Auf einer drehbar auf dem Schwenkhebel 61 gehalterten Gewindespindel 62 ist eine an der Pleuelstange 64 zur Betätigung des Winkelhebels 31 vorhandene Verstellmutter 63 aufgeschraubt. Durch Drehen der Gewindespindel 62 verändert sich der Abstand zwischen der Verstellmutter 63 und damit der Angriffspunkt der Pleuelstange 64 am Schwenkhebel 61 und dem gestellfesten Drehpunkt 65 des Schwerkhebels 61, so dass der durch die Abtastrolle 66 bewirkte konstante Hub des Schwenkhebels 61 einen unterschiedlich grossen Hub der Pleuelstange 64 bei einer anderen Ausgangslage derselben bewirkt.

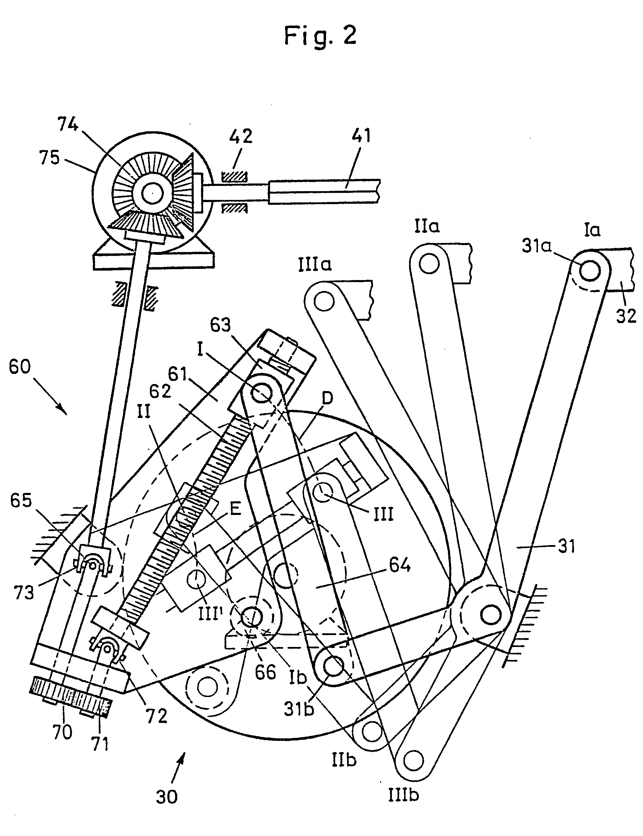

In Fig. 2 sind zwei möglich Endstellungen der beiden Kopplungsenden 31a, 31b des zweiarmigen Hebels 31 dargestellt. Dabei bedeuten die Stellen la, lb, und lla, llb diese Endstellen und die Stellen llla, lllb die jeweiligen Schwenkendlagen. Somit wird der zweiarmige Hebel 31 in der Stelle la, lb zwischen den Punkten la-llla bzw. lb-lllb und in der Stelle lla, llb zwischen den Punkten lla-llla bzw. llb-lllb bewegt, wenn der Angriffspunkt der Verstellmutter 63 mit der Pleuelstange 64 entsprechend von der Stelle I zur Stelle II verschoben wird, und damit wird bei Betätigung des Schwenkhebels 61 durch Kurvenscheibe und Abtastrolle 66 entweder der Punkt I den Bogen D zum Punkt III oder der Punkt II den Bogen E zum Punkt III' beschrieben.

Mit zwei Zahnrädern 70, 71, zwei Kardangelenken 72, 73 und über ein Doppelkegelgetriebe 74 lassen sich somit sämtliche Einstellungen von einer zentralen Stelle aus, die durch den Motor 75 symbolisch dargestellt ist, auf einfache Weise und korrekt durchführen.

## Patentansprüche

1. Anordnung zum Abtrennen von Gruppen verschiedener Länge von in einem Strom zugeführten, hochkant stehenden scheibenförmigen Gegenständen (G), insbesondere Biskuits, indem mittels des Verschiebeweges eines in Stromrichtung bewegbaren, am stromabwärtigen Ende der jeweiligen Gruppe befindlichen Abholbodens (10) und Anhaltens des Stromes nachfolgender Gegenstände mittels einer Trennvorrichtung (23) die Gruppenlänge bestimmt wird, gekennzeichnet durch ein erstes Verstellgetriebe (40) zur Verschiebung der Trennvorrichtung (23) relativ zu dem mit ihr gekuppelten Abholboden (10), durch ein zweites Verstellgetriebe (50) zur Verschiebung eines Rückhalters (21) in Stromrichtung und durch ein drittes Verstellgetriebe (60) zur Verschiebung der stromaufwärtigen Endstellung des Abholbodens (10), wobei die drei Verstellgetriebe (40, 50, 60) derart miteinander wirkverbunden sind, dass sich die Verschiebungen in Betrag und Richtung entsprechen.

2. Anordnung nach Patentanspruch 1, dadurch gekennzeichnet, dass die drei Verstellgetriebe (40, 50, 60) mechanisch mit einem gemeinsamen Hauptantrieb (75) gekoppelt sind.

3. Anordnung nach Patentanspruch 2, dadurch gekennzeichnet, dass das genannte erste Verstellgetriebe (40) eine Drehwelle (41) mit einer axial verschieblichen Gewindehülse (44) ist, mit welcher die Trennvorrichtung (23) relativ zum Abholboden (10) verstellbar ist.

4. Anordnung nach Patentanspruch 3, dadurch gekennzeichnet, dass der Abholboden (10) mittels eines Lagerelementes (29) auf der Gewindehülse (44) axial fixiert und drehbeweglich gehaltert ist.

5. Anordnung nach Patentanspruch 4, dadurch gekennzeichnet, dass der Verschiebeantrieb (33) für den Abholboden (10) mit dem Lagerelement (29) starr verbunden ist.

6. Anordnung nach einem der Patentansprüche 2 bis 5, dadurch gekennzeichnet, dass der vertikalbeweglich gesteuerte Rückhalter (21) zur gemeinsamen Verschiebung in Stromrichtung mit einer Führungsauflage (20) für die zur Gruppierung gestauten Gegenstände (G) verbunden ist.

7. Anordnung nach Patentanspruch 6, dadurch gekennzeichnet, dass das dritte Verstellgetriebe (60) einen Kurvenabtaster (66) an einem Schwenkhebel (61) aufweist, von welchem Schwenkhebel (61) der eine Hebelarm zur Verschiebung von Abholboden (10), Trennvorrichtung (23) sowie Führungsauflage (20) und Rückhalter (21) in seiner Länge veränderbar ist, und dass die Längeneinstellung mit der Betätigungsvorrichtung (70-75) für die Drehwelle (41) gekoppelt ist.

8. Anordnung nach Patentanspruch 7, dadurch gekennzeichnet, dass die Trennvorrichtung (23) als Trennschwert ausgebildet ist.

## Claims

1. An arrangement for separating upended, disc-shaped articles (G), particularly biscuits, which are supplied in a flow, into groups of different lengths, in that the length of the group is determined by means of the displacement travel of a collecting base (10), which is movable in the direction of flow and is disposed at the downstream end of the respective group, and by means of stopping the flow of the following articles by means of a separating device (23), characterised by a first adjusting drive mechanism (40) for displacing the separating device (23) relative to the collecting base (10) connected thereto, a second adjusting drive mechanism (50) for displacing a retainer (21) in the direction of flow, and a third adjusting drive mechanism (60) for displacing the upstream end position of the collecting base (10), the three adjusting drive mechanisms (40, 50, 60) being in operative connection with one another in such a way that the amount and direction of the displacements correspond with each other.

2. An arrangement as claimed in claim 1, characterised in that the three adjusting drive mechanisms (40, 50, 60) are mechanically coupled to a common main drive (75).

3. An arrangement as claimed in claim 2, characterised in that said first adjusting drive mechanism (40) is a rotary shaft (41) having an axially displaceable threaded sleeve (44) with which the separating device (23) is adjustable relative to the collecting base (10).

4. An arrangement as claimed in claim 3, characterised in that the collecting base (10) is axially fixed and rotatably mounted on the threaded sleeve (44) by means of a bearing element (29).

5. An arrangement as claimed in claim 4, characterised in that the displacement drive (33) for the collecting base (10) is rigidly connected to the bearing element (29).

6. An arrangement as claimed in any of claims 2 to 5, characterised in that the retainer (21), which is controlled in a vertically movable manner, is connected, for joint displacement in the direction of flow, to a guide support (20) for the articles (G) which have accumulated for grouping.

7. An arrangement as claimed in claim 6, characterised in that the third adjusting drive mechanism (60) has a cam follower (66) on a swivelling lever (61), the length of one lever arm being alterable in order to displace the collecting base (10), the separating device (23), the guide support (20) and the retainer (21), and that the length adjustment is coupled to the actuating device (70-75) for the rotary shaft (41).

8. An arrangement as claimed in claim 7, characterised in that the separating device (23) is a separating blade.

**Revendications**

1. Dispositif pour la séparation de groupes de longueurs différentes d'objets discoïdaux (G), en particulier de biscuits, placés de chant et arrivant en un courant, la longueur du groupe étant déterminée au moyen de la course de translation d'un plateau d'enlèvement (10) qui est mobile dans la direction du courant et qui se trouve à l'extrémité aval du groupe considéré et au moyen de l'arrêt du courant d'objets subséquents par un dispositif de séparation (23), caractérisé par un premier mécanisme de réglage (40) pour le déplacement du dispositif de séparation (23) par rapport au plateau d'enlèvement (10) qui lui est accouplé, par un deuxième mécanisme de réglage (50) pour le déplacement d'un organe de retenue (21) dans la direction du courant et par un troisième mécanisme de réglage (60) pour le déplacement de la position extrême amont du plateau d'enlèvement (10), les trois mécanismes de réglage (40, 50, 60) étant reliés fonctionnellement entre eux de telle manière que les déplacements se correspondent en grandeur et en direction.

2. Dispositif selon la revendication 1, caractérisé en ce que les trois mécanismes de réglage (40, 50, 60) sont reliés mécaniquement à une commande principale commune (75).

3. Dispositif selon la revendication 2, caractérisé en ce que ledit premier mécanisme de réglage (40) est un arbre rotatif (41) avec une douille filetée (44) coulissant axialement, avec laquelle le dispositif de séparation (23) peut être réglé par rapport au plateau d'enlèvement (10).

4. Dispositif selon la revendication 3, caractérisé en ce que le plateau d'enlèvement (10) est maintenu en position axialement fixe et mobile en rotation sur la douille filetée (44) au moyen d'un élément-palier (29).

5. Dispositif selon la revendication 4, caractérisé en ce que le mécanisme de commande de translation (33) pour le plateau d'enlèvement (10) est raccordé rigidement à l'élément-palier (29).

6. Dispositif selon l'une quelconque des revendications 2 à 5, caractérisé en ce que l'organe de retenue (21) à mouvement vertical commandé est raccordé, en vue du déplacement en commun dans la direction du courant, à un appui de guidage (20) pour les objets (G) accumulés en vue de leur groupement.

7. Dispositif selon la revendication 6, caractérisé en ce que le troisième mécanisme de réglage (60) comporte un galet suiveur de came (66) sur un levier pivotant (61), levier pivotant (61) dont l'un des bras de levier peut être modifié en longueur pour le déplacement du plateau d'enlèvement (10), du dispositif de séparation (23), ainsi que de l'appui de guidage (20) et de l'organe de retenue (21), et en ce que le dispositif de réglage de longueur est accouplé au dispositif d'actionnement (70-75) de l'arbre rotatif (41).

8. Dispositif selon la revendication 7, caractérisé en ce que le dispositif de séparation (23) est réalisé sous forme de lame de séparation.

Fig. 1

# Fig. 2